# EUROPÄISCHE PATENTANMELDUNG

(11) **EP 4 325 012 A1**
(43) Veröffentlichungstag der Anmeldung: **21.02.2024**
(21) Anmeldenummer: 23186192.3
(22) Anmeldetag: 18.07.2023
(51) Int. Cl.: E05D 15/06, B61D 19/00, E05D 15/10

(54) **SCHWENKSCHIEBETÜR-FÜHRUNGSEINRICHTUNG OHNE FÜHRUNGSSCHIENE**

(30) Priorität: 17.08.2022 DE 102022120816
(71) Anmelder: Bode - Die Tür GmbH, 34123 Kassel (DE)
(72) Erfinder: Pellegrini, Andreas, 34295 Edermünde (DE)
(74) Vertreter: Patentanwälte Bauer Vorberg Kayser

(57) **Zusammenfassung**

Die vorliegende Erfindung betrifft eine Schwenkschiebetür-Führungseinrichtung (20), umfassend ein aus einem ersten Material gebildetes Längsprofil (22) mit einer Führungsbahn (26) und in der Führungsbahn (26) auf Tragrollen (32) linearbeweglich gelagerten Läufer (24), der mit einem Türflügel (50) verbunden ist und eine Traglast auf den Läufer (24) überträgt. In der Führungsbahn (26) sind sich in Längsrichtung erstreckende konvexe Lagerelemente (42) angeordnet, auf denen Tragrollen des Läufers (24) mit jeweils umlaufenden konkave Führungsnuten (52) abrollen und in Querrichtung (Y-Y) gehalten sind. Das Längsprofil (22) aus einem ersten Material gebildet ist, das weicher ist, als ein zweites Material, aus dem die Lagerelemente (34) gebildet sind. Der Türflügel (50) ist derart mit dem Läufer verbunden ist, dass ein Schwerpunkt des Türflügels (50) in Laufrichtung (X-X) und in Querrichtung (Y-Y) außermittig auf den Läufer (24) wirkt. Der Läufer (24) weist ausschließlich Tragrollen (32) auf, die gemeinsam der Lastabtragung der vom Türflügel (50) auf den Läufer (24) wirkenden Last dienen. Im Betrieb rollt zumindest eine Tragrolle (32) auf dem oberen konvexen Lagerelement (34-1) und andere Tragrolle (32) auf dem unteren konvexen Lagerelement (34-2) ab, wobei beide Tragrollen (32) über die konvexen Lagerelemente (34) Last des Türflügels (50) ableiten.

## Beschreibung

Die vorliegende Erfindung betrifft eine Schwenkschiebetür-Führungseinrichtung eines Fahrzeugs des öffentlichen Personenverkehrs, umfassend
- ein aus einem ersten Material gebildetes Längsprofil zur Befestigung an einem Türportal, das eine im Querschnitt u-förmige Führungsbahn mit einer Bodenfläche und zwei sich davon erstreckenden Seitenwänden ausbildet,
- einen zumindest teilweise unmittelbar in die Führungsbahn eingreifenden und in der Führungsbahn auf Tragrollen linearbeweglich gelagerten Läufer, mit einem Befestigungsbereich für eine Befestigung eines Türflügels, wobei über den Befestigungsbereich eine Traglast auf den Läufer übertragen wird.

Unter einem "Fahrzeug" des öffentlichen Personenverkehrs können radgebundene oder schienengebundene Fahrzeuge zu verstehen sein. Bei einem radgebundenen Fahrzeug kann es sich beispielsweise um ein Busfahrzeug oder ein anderweitiges zum Personentransport vorgesehenes Transportfahrzeug handeln. Bei einem schienengebundenen Fahrzeug kann es sich beispielsweise um einen Zug (z.B. einen Hochgeschwindigkeitszug oder einen Regionalzug), eine Straßenbahn, eine Tram, eine S-Bahn, eine U-Bahn etc. handeln.

Schwenkschiebetüren führen während des Öffnungs- und Schließvorgangs neben einer Schwenkbewegung auch eine seitliche Verschiebung durch. Derartige Türsysteme sind beispielsweise aus der EP 1 040 979 A2 und der EP 1 314 626 A1 bekannt

Die Erfindung bezieht sich auf einflüglige oder zweiflüglige Fahrgasttüren, auf "einen" Türflügel bezogene Termini und Beschreibungspassagen schließen demnach nicht aus, dass die Erfindung auch bei zwei- oder mehrflügligen Fahrgasttüren zum Einsatz kommen kann. Unter einem "Türflügel" kann synonym auch ein "Türblatt" oder eine Tür verstanden werden.

Führungseinrichtungen für Türsysteme sind aus dem Stand der Technik allgemein bekannt. Üblicherweise ist am Fahrzeug ein Längsprofil vorgesehen, an dem eine Führungsschiene beispielsweise über Nutensteine und/oder Schrauben an einem biege- und torsionssteifen Trägerprofil befestigt ist. In der Führungsschiene ist ein mit dem Türflügel verbundener Läufer linearbeweglich geführt.

Bei Schwenkschiebetüren ergeben sich dadurch hohe Belastungen, dass die Last bzw. der Schwerpunkt des mit dem Läufer verbundenen Türflügels nicht zentral oder mittig auf den Läufer, sondern sowohl in linearer Laufrichtung (X-Richtung), als auch in dazu quer verlaufender Querrichtung (Y-Richtung) versetzt wirkt. In der Regel ist der Türflügel an einem der freien Enden des Läufers befestigt, wodurch dieser einseitig nach unten gezogen wird. Dies führt zu hohem Verschleiß der Rollkörper und der Führungsschiene. Hinzu kommt, dass der Türflügel während der Bewegung und auch aufgrund von beispielsweise durch Passagiere aufgebrachte seitliche Kräfte in Querrichtung (Z-Richtung) bewegt wird. Auch dies führt zu hohen Belastungen in der Führungsschien und zu einem ungewollten Wackeln oder Vibrieren der Tür.

Auch ist die Herstellung einer solchen Führungsschiene, die an dem Trägerprofil befestigt wird, relativ kostspielig, da diese, um die Belastungen aufnehmen zu können, im Ziehverfahren aus Stahl hergestellt, danach gehärtet, gerichtet und oberflächengeschützt wird. Nachteilig an einer derart ausgebildeten Führungseinrichtung ist - insbesondere bei Verwendung bei einer Fahrgasttür eines Fahrzeugs des öffentlichen Personenverkehrs - auch das aus der massiven Bauweise resultierende, relativ hohe Eigengewicht sowie der relativ hohe Bauraumbedarf.

Entsprechend liegt der vorliegenden Erfindung die Aufgabe zugrunde, eine Führungseinrichtung für ein Schwenkschiebetürsystem eines Fahrzeugs bereitzustellen, das mit möglichst geringem Aufwand und geringen Kosten herstellbar ist. Das Eigengewicht und der Bauraumbedarf sollen dabei möglichst gering sein. Wesentlich ist auch, dass die Führungseinrichtung dauerhaft zuverlässig und möglichst verschleißarm betrieben werden kann.

Zur Lösung dieser Aufgabe wird eine Führungseinrichtung mit den Merkmalen des Anspruchs 1 vorgeschlagen.

Es ist darauf hinzuweisen, dass die in den Ansprüchen einzeln aufgeführten Merkmale in beliebiger, technisch sinnvoller Weise miteinander kombiniert werden können und weitere Ausgestaltungen der Erfindung aufzeigen. Die Beschreibung charakterisiert und spezifiziert die Erfindung insbesondere im Zusammenhang mit den Figuren zusätzlich.

Die erfindungsgemäße Schwenkschiebetür-Führungseinrichtung ist deshalb besonders vorteilhaft, weil
- in der Führungsbahn an den Innenseiten der Seitenwände jeweils ein sich in Längsrichtung erstreckendes konvexes Lagerelement angeordnet ist, nämlich ein oberes konvexes Lagerelement und ein unteres konvexes Lagerelement, wobei die Lagerelemente derart angeordnet sind, dass sie sich parallel zueinander erstrecken und einander gegenüberliegen,
- die auf dem die den Läufer lagernden Tragrollen jeweils eine umlaufende konkave Führungsnut aufweisen, über die sie im Betrieb bei einer Linearbewegung des Läufers Laufrichtung jeweils auf einem der konvexen Lagerelemente abrollen und in Querrichtung gehalten sind,
- das Längsprofil aus einem ersten Material gebildet ist, das weicher ist, als ein zweites Material, aus dem die Lagerelemente gebildet sind,
- der Befestigungsbereich für den Türflügel derart am Läufer angeordnet ist, dass dessen Schwerpunkt bzw. der Schwerpunkt eines daran befestigten Türflügels in Laufrichtung und in Querrichtung außermittig auf den Läufer wirkt,
- der Läufer ausschließlich Tragrollen aufweist, die gemeinsam der Lastabtragung der vom Türflügel auf den Läufer wirkenden Last dienen,
- im Betrieb zumindest eine Tragrolle auf dem oberen konvexen Lagerelement und zumindest eine andere Tragrolle auf dem unteren konvexen Lagerelement abrollt, wobei beide Tragrollen über die konvexen Lagerelemente Last des Türflügels ableiten.

Der Begriff Tragrolle wird im Sinne der Erfindung als Synonym für sämtliche geeigneten Körper, die auf konvexen Lagerelementen abrollen können, verwendet, insbesondere Kugeln, Rollen oder Räder.

Ein wesentlicher Aspekt der Erfindung besteht darin, dass auf die im Stand der Technik bei Schwenkschiebetüren stets vorhandene Führungsschiene vollständig verzichtet wird. Der Läufer wird unmittelbar in dem fest mit dem Fahrzeug verbundenen Längsprofil geführt. Durch den Verzicht auf die Führungsschiene können erhebliche Kosten und auch Gewicht eingespart werden. Auch der Aufwand für die Montage und Wartung der Führungseinrichtung ist deutlich reduziert. Das Längsprofil ist dementsprechend in seiner Geometrie entsprechend angepasst, so dass es die Aufnahme und Bewegung des Läufers ermöglicht. Es bildet dazu eine im Querschnitt u-förmige Führungsbahn mit einer Bodenfläche und zwei sich davon vorzugsweise etwa rechtwinklig erstreckenden Seitenwänden aus.

Die Anmelderin hat weiterhin erkannt, dass es nicht notwendig ist, das gesamte, üblicherweise aus weniger widerstandsfähigem Aluminium bestehende Längsprofil aus einem ausreichend harten und widerstandsfähigen Material zu fertigen, vielmehr reicht es aus, geeignete Lagerelemente im Längsprofil vorzusehen, auf welchen der Läufer dauerhaft und verschleißarm geführt werden kann. Die Lagerelemente sind deshalb aus einem härteren Material als das Längsprofil selbst gefertigt. Beispielsweise sind das Längsprofil aus Aluminium, die Lagerelemente aber aus Stahl, vorzugsweise aus gehärtetem und oberflächenvergütetem Stahl gefertigt.

Die Lagerelemente können vorzugsweise durch Rundstäbe gebildet sein, die auf bzw. in den Innenseiten des u-förmigen Längsprofils befestigt sind, sodass die Tragrollen die Rundstäbe kontaktieren und bei Bewegung des Läufers auf diesen abrollen. Die Rundstäbe sind in das Längsprofil eingelassen, beispielsweise in entsprechenden Längsnuten, die sich entlang einer Längsachse des Längsprofils bzw. der Führungsbahn in Bewegungsrichtung das Läufers erstrecken. Von den Rundstäben tritt im Querschnitt gesehen also nur ein Bereich gegenüber einer Innenoberfläche der Führungsbahn vor. Vorzugsweise befinden sich mehr als 50 % der eingelassenen Lagerelemente innerhalb der Seitenwände der Führungsbahn.

Im Folgenden wird die Erfindung in Zusammenhang mit Rundstäben erläutert, wobei diese nur beispielhaft zu verstehen sind und die Erfindung nicht auf Rundstäbe beschränkt sein soll. Ein besonderer Vorteil bei der Verwendung von Rundstäben besteht darin, dass diese besonders einfach und kostengünstig herstellbar sind und auch die Oberflächenvergütung verhältnismäßig einfach möglich ist.

Die den Läufer im Längsprofil lagernden Tragrollen weisen erfindungsgemäß jeweils eine umlaufende konkave Führungsnut auf, über die sie im Betrieb bei einer Linearbewegung des Läufers in Laufrichtung jeweils auf einem der Rundstäbe abrollen. Vorteilhafterweise sind auf diese Weise die Tragrollen und damit auch der Läufer und der Türflügel in Querrichtung gehalten. Gerade bei Schwenkschiebetüren ist dies ein ganz wesentlicher Vorteil der Erfindung, da sich Bewegungen der Türflügel in Querrichtung während der Türbewegung, aber auch im geöffneten Zustand des Türflügels kaum vermeiden lassen. Diese entstehen durch den komplexen Bewegungsablauf des Türflügels, aber auch durch beispielsweise Personen, die versehentlich von außen gegen die Türflügel drücken. Die Verwendung konvexer Oberflächen der Lagerelemente und entsprechend angepassten Tragrollen mit konkaven Rillen wirken diesem Problem wirksam entgegen.

Ein weiterer wesentlicher Aspekt der Erfindung besteht darin, dass der Läufer keine Spann- oder Führungsrollen, sondern ausschließlich Tragrollen aufweist. Im Gegensatz zum Stand der Technik sind also sämtliche am Läufer angeordneten Tragrollen an der Lastabtragung durch die auf den Läufer wirkende Schwerkraft der Tür beteiligt. Vorzugsweise weisen deshalb auch alle Tragrollen die exakt gleiche Geometrie auf. Dies ist insbesondere dann von Vorteil, wenn auch beide Lagerelemente, also das obere und das untere Lagerelement, die gleichen geometrischen Abmessungen aufweisen. In diesem Fall ist es nicht notwendig verschiedene Tragrollen zu fertigen, die bei der Montage korrekt positioniert und angeordnet werden müssen.

Der Türflügel ist in der Regel im Bereich eines freien Endes des Läufers angeordnet bzw. dort am Befestigungsbereich des Läufers befestigt. Dies begründet auch die außermittige Belastung des Läufers.

Erfindungsgemäß rollt im Betrieb zumindest eine Tragrolle auf dem oberen konvexen Lagerelement und eine andere Tragrolle auf dem unteren konvexen Lagerelement ab, wobei alle Tragrollen gemeinsam die Last des Türflügels ableiten.

Vorzugsweise sind mehr als zwei Tragrollen vorgesehen. In einer besonders vorteilhaften Ausweisvariante sind zwei Tragrollengruppen vorgesehen, deren Tragrollen jeweils in Laufrichtung des Läufers nebeneinander angeordnet sind, wobei die erste Tragrollengruppe näher als die zweite Tragrollengruppe am Türflügel angeordnet ist.

Eine ideale Lastverteilung und Laufruhe des Türflügels ergibt sich dann, wenn ein Gruppenabstand zwischen den beiden Tragrollengruppen größer als ein Rollenabstand zwischen einzelnen Tragrollen ist. Diese optimale Anordnung wird in einer besonders bevorzugten Ausführungsvariante dann zusätzlich verbessert, wenn die erste Tragrollengruppe mehr Tragrollen als die zweite Tragrollengruppe aufweist. Dies ist vor allem deshalb vorteilhaft, da die Einleitung der Last durch den Türflügel endseitig des Läufers erfolgt. Sind nahe dem Einleitungspunkt der Last zunächst mehrere Tragrollen vorgesehen, ergibt sich eine optimale Lastverteilung im Läufer und damit eine gleichmäßigere Belastung der Tragrollen. Vorzugsweise sollte der Tragrollenabstand zwischen einzelnen Tragrollen der ersten Tragrollengruppe kleiner als der Tragrollenabstand der zweiten Tragrollengruppe sein.

Eine Anordnung einer ersten Tragrollengruppe mit fünf Tragrollen und einer zweiten Tragrollengruppe mit zwei Tragrollen hat sich als sehr vorteilhaft erwiesen.

Zumindest eine der Tragrollen ist vorzugsweise derart in ihrer Höhe verstell- und fixierbar ausgeführt, dass die Tragrollen bei der Montage in der Führungsbahn gegeneinander verspannbar und im Betrieb spielfrei führbar sind. Beispielsweise können die verstellbaren Tragrollen eine Excenter-Verstellung aufweisen, über die die Höhe einstellbar ist. Vorzugsweise kann vorgesehen sein, dass entweder die Tragrollen höhenverstellbar ausgeführt sind, die am oberen Lagerelement, oder die Tragrollen, die am unteren Lagerelement zur Anlage kommen sollen. Grundsätzlich können aber auch alle Tragrollen höhenverstellbar ausgeführt sein. Die Führungsbahn weist bei dieser Ausführungsvariante eine Höhe auf, die den Durchmesser der Tragrollen übersteigt.

Es hat sich als besonders vorteilhaft erwiesen, wenn die installierten Tragrollen derart positioniert sind, dass sie im Wechsel das obere und das untere Lagerelement kontaktieren.

In einer besonders vorteilhaften Ausführungsvariante kontaktieren die beiden benachbarten Tragrollen der beiden Tragrollengruppen, also die Tragrollen, die den Gruppenabstand zwischen den beiden Tragrollengruppen begrenzen, das gleiche Lagerelement, sie kontaktieren entweder beide das obere oder beide das untere Lagerelement.

Die Erfindung bezieht sich nicht nur auf die Verwendung von Aluminium für die Herstellung des Längsträgers und gehärtetem Stahl für die Herstellung der Lagerelemente, alternativ können auch andere geeignete Materialien verwendet werden. Insbesondere ist es auch möglich, die Tragrollen aus Metall oder Kunststoff zu fertigen, wobei sich Metall als besonders geeignet erwiesen hat.

Nach einer weiteren vorteilhaften Ausgestaltung kann bei einer mit der Erfindung vorgeschlagenen Führungseinrichtung ein zum Tragen eines Türflügels ausgebildeter zusätzlicher Träger vorgesehen sein, der mit dem Läufer lösbar verbunden ist. An einem solchen Träger kann der Türflügel unmittelbar befestigt bzw. angeordnet werden. Auch kann an dem Träger der Türflügel mittelbar befestigt werden, d.h. unter Zwischenschaltung geeigneter Verbindungs-, Trag-, oder Führungsmittel. Eine "Befestigung" schließt nicht aus, dass der Träger nebst dem "Tragen" einer Last auch Führungs- oder Lagereigenschaften aufweist. Die lösbare Verbindbarkeit des Trägers mit dem Läufer vereinfacht die Montage der Führungseinrichtung vor der Inbetriebnahme. Auch lässt sich der Träger damit einfacher austauschen, z.B. im Schadens- oder Wartungsfall.

Die Erfindung wird anhand der nachfolgenden Figuren näher erläutert. Diese zeigen eine nicht einschränkend zu verstehende Ausführungsvariante der Erfindung. Es zeigen:
- Fig. 1: eine Ausschnittsdarstellung einer bevorzugten Ausführungsvariante der Erfindung in Frontalansicht mit einem Türflügel und einem Läufer,
- Fig. 2: eine Querschnittsdarstellung der Ausführungsvariante aus Fig 1,
- Fig. 3: eine perspektivische Darstellung der Ausführungsvariante aus Fig 1, von schräg vorne, ohne Türflügel und mit zwei Läufern,
- Fig. 4: eine perspektivische Darstellung der Ausführungsvariante aus Fig 1, von schräg hinten, ohne Türflügel und mit zwei Läufern,
- Fig. 5: eine Darstellung von Tragrollen der bevorzugten Ausführungsvariante der Erfindung nach Fig 1 in Frontalansicht, ohne Türflügel und ohne Läufer,
- Fig. 6: eine Schnittdarstellung der bevorzugten Ausführungsvariante der Erfindung nach Fig 1 mit Tragrolle und Läufer, Tragrolle mit Anlage unten,

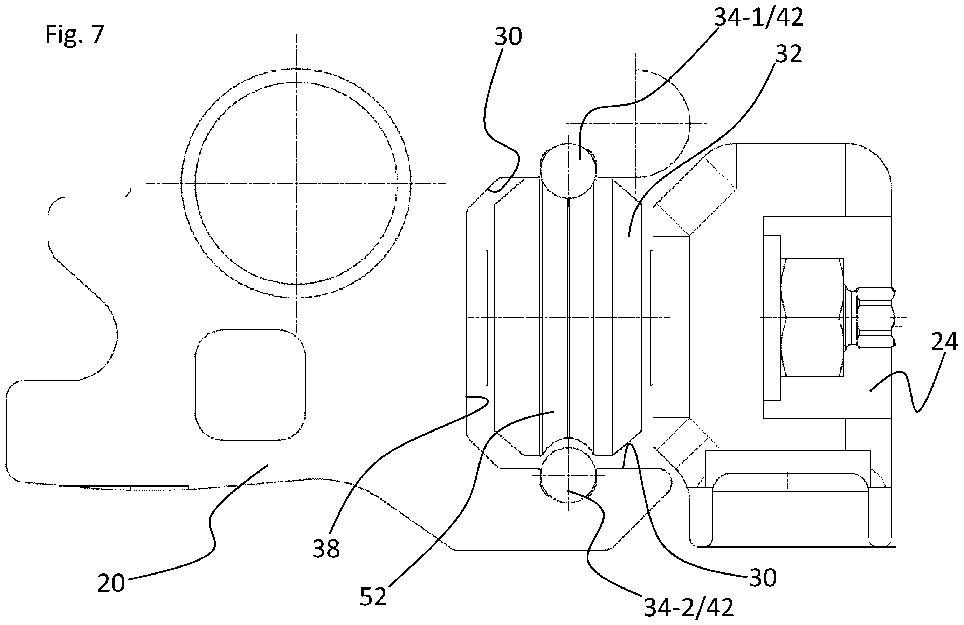

- Fig. 7: eine Schnittdarstellung der bevorzugten Ausführungsvariante der Erfindung nach Fig 1 mit Tragrolle und Läufer, Tragrolle mit Anlage oben.

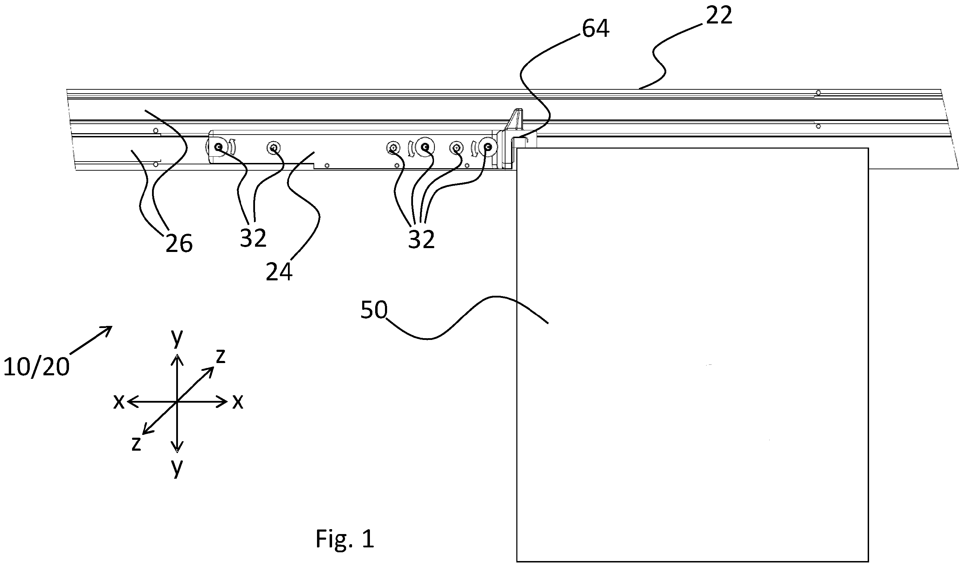

Insbesondere die Figuren 1 bis 4 verdeutlichen den Aufbau einer bevorzugten Ausführungsvariante eine erfindungsgemäßen Schwenkschiebetür-Führungseinrichtung 20.

Die Schwenkschiebetür-Führungseinrichtung 20 kann beispielsweise bei einem Schwenkschiebetürsystem 10 eines nicht dargestellten Fahrzeugs (z. B. einem Fahrzeug für den öffentlichen Personenverkehr) zum Einsatz kommen. Das Schwenkschiebetürsystem 10 umfasst zumindest einen Türflügel 50 (gegebenenfalls auch mehrere, z.B. zwei Türflügel 50), der unter Einsatz einer Antriebseinheit über eine Querführung 54 aus einer ein Türportal des Fahrzeugs verschließenden Stellung in eine einen Fahrgastzustieg durch das Türportal freigebende Öffnungsstellung bewegbar ist. Die Schwenkschiebetür-Führungseinrichtung 20 ist vorzugsweise im oberen Bereich des Türportals angeordnet, sie kann auch bei bereits in ein Fahrzeug implementierten Türsystemen nachgerüstet werden.

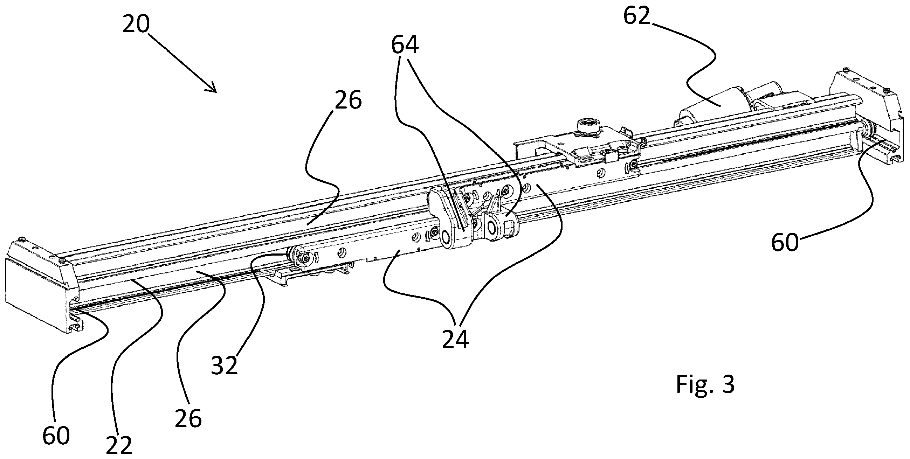

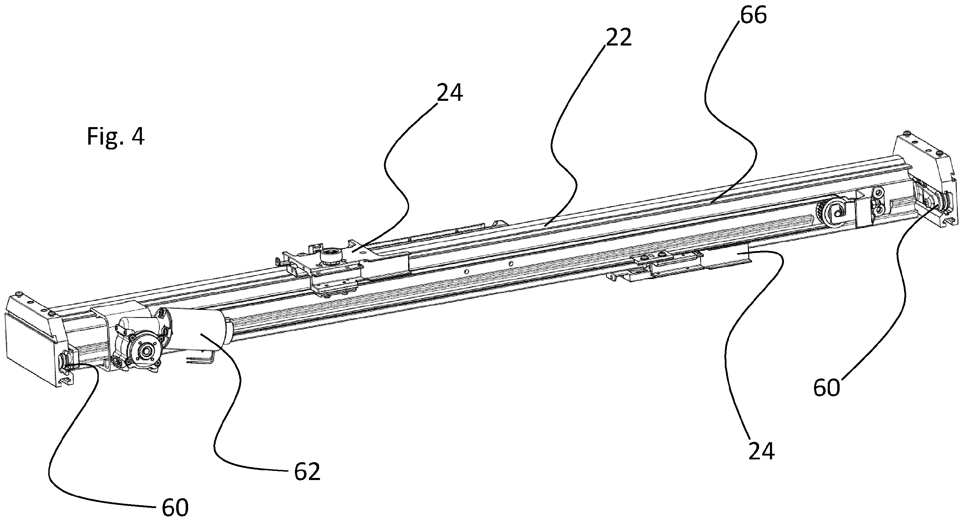

In den Figuren 3 und 4 sind die Querführung 60, aber auch Antriebe 62 erkennbar, die die Türflügel 50 in Längsrichtung antreiben. Die Antriebe 62 werden bei einer Öffnung der Türflügel 50 zunächst aus dem Türportal mit heraus bewegt, um dann die Türflügel 50 seitlich des Fahrzeugs zu bewegen, beispielsweise über einen Spindel- oder Zahnriemenantrieb mit Zahnriemen 66 (vgl. Fig 4).

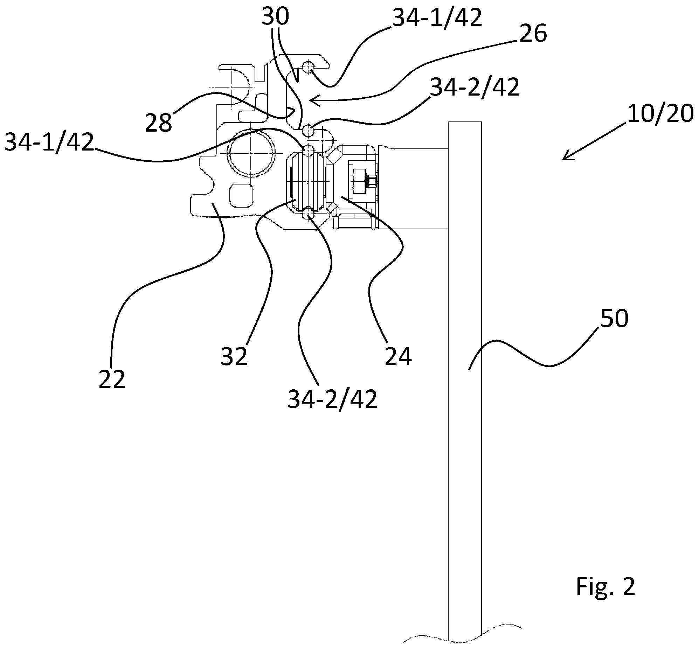

In einem Längsprofil 22 ist ein linearbeweglich geführter Läufer 24 angeordnet. Der Läufer 24 greift zumindest teilweise in das Längsprofil 22, das nach Art eines U-Profils ausgebildet ist, ein. Gezeigt ist ein Längsprofil 22 mit zwei Führungsbahnen 26, wobei in den Figuren 1 und 2 aus darstellerischen Gründen nur in der unteren Führungsbahn 26 ein Läufer 24 gezeigt ist, selbstverständlich ist auch in der gezeigten oberen Führungsbahn 26 ein Läufer 24 geführt. Weist das Schwenkschiebetürsystem 10 nur einen Türflügel 50 auf, reicht eine einzige Führungsbahn 26.

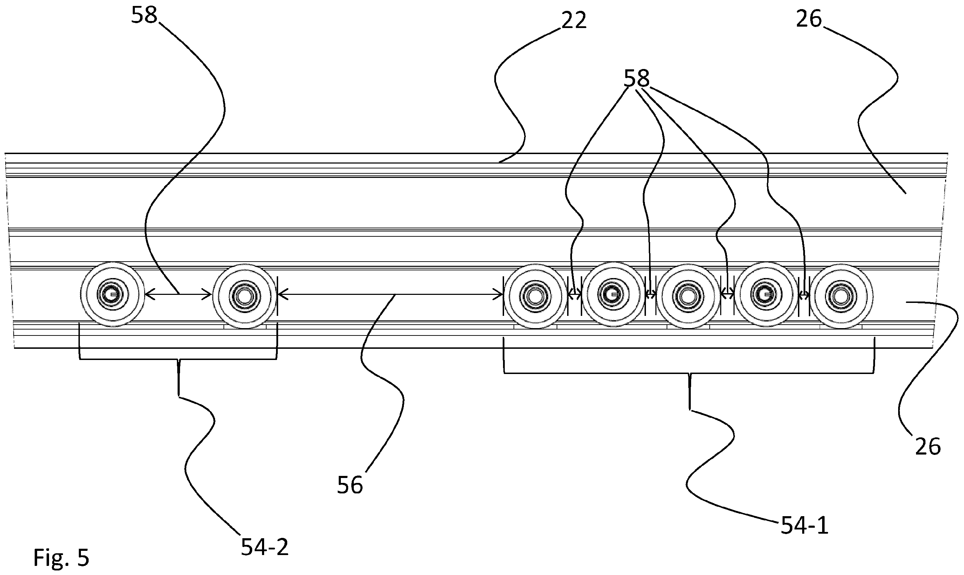

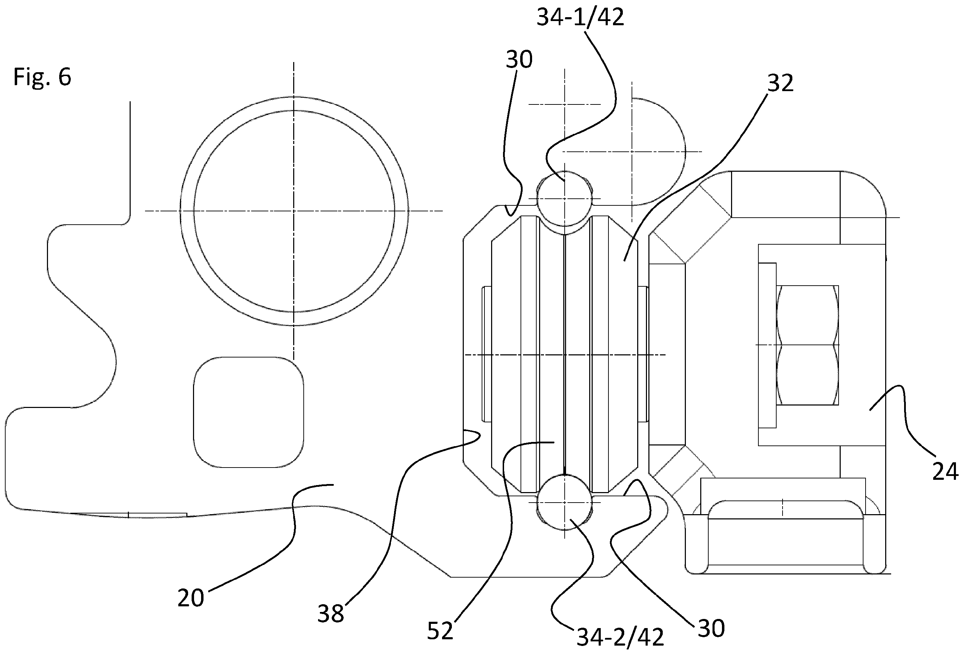

Die beiden Führungsbahnen 26 weisen jeweils eine Bodenfläche 28 und zwei sich davon rechtwinklig erstreckende Seitenwände 30 auf (vgl. insbesondere Figuren 5 und 6), wobei die beiden inneren Seitenwände 30 der beiden Führungsbahnen 26 im gezeigten Ausführungsbeispiel durch einen gemeinsamen Mittelsteg gebildet sind. Alternativ können auch zwei Längsprofil 22 übereinander angeordnet sein, die keinen gemeinsamen Mittelsteg aufweisen.

Insbesondere Figur 1 verdeutlicht, dass der Türflügel 50 in einem Befestigungsbereich 64 an einem freien Ende des Läufers 24 mit diesem verbunden ist. Dadurch wirkt die Last bzw. der Schwerpunkt des Türflügels 50 (angedeutet durch den Pfeil in Fig.1) nicht zentral auf den Läufer 24, sondern greift endseitig in Längsrichtung X-X außermittig an. Hinzu kommt, dass der Schwerpunkt der Tür auch in Querrichtung Y-Y außermittig angeordnet ist, was Figur 2 deutlich zeigt. Dies beides führt zu erhöhten Anforderungen an die Ausführung und Positionierung der Tragrollen 32 und Dimensionierung des Läufers 24.

Im gezeigten Ausführungsbeispiel sind die Tragrollen 32 des Läufers 24 in der Führungsbahn 26 auf sich in Längsrichtung X-X entlang der Führungsbahn 26 erstreckenden Lagerelementen 34 geführt. Die an den Innenseiten 36 der Seitenwände 30 angeordneten Lagerelemente 34 weisen jeweils eine konvexe Oberfläche auf. Die Tragrollen 32 weisen jeweils eine dazu korrespondierende umlaufende konkave Führungsnut 52 auf, über die sie im Betrieb bei einer Linearbewegung des Läufers 24 in Lauf- bzw. Längsrichtung X-X jeweils auf einem der konvexen Lagerelemente 34 abrollen und in Querrichtung Y-Y gehalten sind. Bei der gezeigten Ausführungsvariante sind die Lagerelemente 34 als Rundstäbe 42 ausgeführt, die jeweils in die Seitenwände 30 eingelassen sind.

Erfindungsgemäß bestehen die Lagerelemente 34 aus einem härteren und widerstandsfähigeren Material als das Längsprofil 22.

Die Figuren 5 und 6 verdeutlichen auch, dass Tragrollen 32 auf dem oberen konvexen Lagerelement 34-1 oder auf dem unteren konvexen Lagerelemente 34-2 abrollen. Die Tragrollen 32 sind in Bezug auf ihre Drehachse unterschiedlich hoch in der Führungsbahn 26 angeordnet, sie sind im Betrieb gegeneinander verspannt. Die Höhe der Führungsbahn 26 übersteigt den Durchmesser der Tragrollen 32. Dies wird dadurch erreicht, dass zumindest eine der Tragrollen 32 höhenverstellbar ausgeführt ist, beispielsweise über eine Excenterverstellung. Diese Verstellbarkeit ist durch die Pfeile auf dem Läufer 24 in den Figuren symbolisiert. Die Tragrollen 34 tragen alle zur Lastabtragung bei, unabhängig davon, ob sie auf dem oberen konvexen Lagerelement 34-1 oder auf dem unteren konvexen Lagerelemente 34-2 abrollen. Die beiden konvexen Lagerelemente 34 und auch alle Tragrollen 32 _{w}eisen jeweils die gleiche Geometrie auf, so dass jede Tragrolle je nach ihrer Positionierung auf beiden Lagerelementen abrollen kann. Die in Fig. 5 gezeigten Pfeile verdeutlichen, an welchem konvexen Lagerelement 34 die Tragrollen 32 abrollen.

Im gezeigten Ausführungsbeispiel ist erkennbar, dass zwei Tragrollengruppen 54-1, 54-2 vorgesehen sind, deren Tragrollen 32 jeweils in Laufrichtung des Läufers 24 nebeneinander angeordnet sind, wobei die erste Tragrollengruppe 54-1 näher am Türflügel 50 angeordnet ist, als die zweite Tragrollengruppe 54-2. Ein Gruppenabstand 56 zwischen den beiden Tragrollengruppen 54-1, 54-2 ist größer als ein Tragrollenabstand 58 zwischen einzelnen Tragrollen 32.

Die erste Tragrollengruppe 54-1 weist mehr Tragrollen 32 als die zweite Tragrollengruppe 54-2 auf. Es hat sich gezeigt, dass die Nähe zum Schwerpunkt des Türflügels 50 bei der Anzahl und Anordnung der Tragrollen 32 berücksichtigt werden muss, um ein optimales Ergebnis zu erzielen. Auch hat sich gezeigt, dass es vorteilhaft ist, wenn der Tragrollenabstand 58 zwischen einzelnen Tragrollen 32 der ersten Tragrollengruppe 54-1 kleiner als der Tragrollenabstand 58 der zweiten Tragrollengruppe 54-2 ist.

Im Ausführungsbeispiel weist die erste Tragrollengruppe 54-1 fünf Tragrollen 32 und die zweite Tragrollengruppe 54-2 zwei Tragrollen 32 auf.

Die beiden benachbarten Tragrollen 32 der beiden Tragrollengruppen 54, also die Tragrollen 32, die den Gruppenabstand 56 zwischen den beiden Tragrollengruppen 54 begrenzen, kontaktieren das gleiche Lagerelement 34, im gezeigten Ausführungsbeispiel das untere Lagerelement 34-2.

Die Erfindung ist nicht auf die gezeigten Ausführungsbeispiele beschränkt, sondern umfasst auch weitere Ausführungsvarianten, die auf Basis der Erfindung möglich sind.

### Bezugszeichenliste

10 Schwenkschiebtürsystem
20 Schwenkschiebetür-Führungseinrichtung
22 Längsprofil
24 Läufer
28 Bodenfläche
30 Seitenwand
32 Tragrolle
34 Lagerelement
34-1 oberes Lagerelement
34-2 unteres Lagerelement
36 Innenseite
42 Rundstab
50 Türflügel
52 konkave Führungsnut
54 Tragrollengruppe
54-1 erste Tragrollengruppe, nahe Türflügel
54-2 zweite Tragrollengruppe, entfernt von Türflügel
56 Gruppenabstand
58 Tragrollenabstand
60 Querführung
62 Antrieb
64 Befestigungsbereich
66 Zahnriemen

## Patentansprüche

1. Schwenkschiebetür-Führungseinrichtung (20) für ein Fahrzeug des öffentlichen Personenverkehrs, umfassend
- ein aus einem ersten Material gebildetes Längsprofil (22) zur Befestigung an einem Türportal, das eine im Querschnitt u-förmige Führungsbahn (26) mit einer Bodenfläche (28) und zwei sich davon erstreckenden Seitenwänden (30) ausbildet,
- einen zumindest teilweise unmittelbar in die Führungsbahn (26) eingreifenden und in der Führungsbahn (26) auf Tragrollen (32) linearbeweglich gelagerten Läufer (24) mit einem Befestigungsbereich (64) für eine Befestigung eines Türflügels (50), wobei über den Befestigungsbereich (64) eine Traglast auf den Läufer (24) übertragen wird,
wobei
- in der Führungsbahn (26) an den Innenseiten (36) der Seitenwände (30) jeweils ein sich in Längsrichtung erstreckendes konvexes Lagerelement (42) angeordnet ist, nämlich ein oberes konvexes Lagerelement (34-1) und ein unteres konvexes Lagerelement (34-2), wobei die Lagerelemente (34) derart angeordnet sind, dass sie sich parallel zueinander erstrecken und einander gegenüberliegen,
- die den Läufer (24) lagernden Tragrollen (32) jeweils eine umlaufende konkave Führungsnut (52) aufweisen, über die sie im Betrieb bei einer Linearbewegung des Läufers (24) in Laufrichtung (X-X) jeweils auf einem der konvexen Lagerelemente (34) abrollen und in Querrichtung (Y-Y) gehalten sind,
- das Längsprofil (22) aus einem ersten Material gebildet ist, das weicher ist, als ein zweites Material, aus dem die Lagerelemente (34) gebildet sind,
- der Befestigungsbereich (64) derart am Läufer (24) angeordnet ist, dass dessen Schwerpunkt in Laufrichtung (X-X) und in Querrichtung (Y-Y) außermittig auf den Läufer (24) wirkt,
- der Läufer (24) ausschließlich Tragrollen (32) aufweist, die gemeinsam der Lastabtragung der über den Befestigungsbereich (64) eingeleiteten und auf den Läufer (24) wirkenden Last dienen,
- im Betrieb zumindest eine Tragrolle (32) auf dem oberen konvexen Lagerelement (34-1) und andere Tragrolle (32) auf dem unteren konvexen Lagerelement (34-2) abrollt, wobei beide Tragrollen (32) über die konvexen Lagerelemente (34) Last des Türflügels (50) ableiten.

2. Schwenkschiebetür-Führungseinrichtung (20) nach Anspruch 1, **dadurch gekennzeichnet, dass** der Befestigungsbereich (64) im Bereich eines freien Endes des Läufers (24) angeordnet ist.

3. Schwenkschiebetürsystem (10) nach Anspruch 1 oder Anspruch 2, **dadurch gekennzeichnet, dass** mehr als zwei Tragrollen (24) vorgesehen sind.

4. Schwenkschiebetür-Führungseinrichtung (20) nach Anspruch 2 oder Anspruch 3, **dadurch gekennzeichnet, dass** zwei Tragrollengruppen (54-1, 54-2) vorgesehen sind, deren Tragrollen (32) jeweils in Laufrichtung des Läufers (24) nebeneinander angeordnet sind, wobei die erste Tragrollengruppe (54-1) näher am Türflügel (50) angeordnet ist, als die zweite Tragrollengruppe (54-2).

5. Schwenkschiebetür-Führungseinrichtung (20) nach einem der Ansprüche 2 bis 4, **dadurch gekennzeichnet, dass** ein Gruppenabstand (56) zwischen den beiden Tragrollengruppen (54-1, 54-2) größer als ein Tragrollenabstand (58) zwischen einzelnen Tragrollen (32) ist.

6. Schwenkschiebetür-Führungseinrichtung (20) nach Anspruch 5, **dadurch gekennzeichnet, dass** die erste Tragrollengruppe (54-1) mehr Tragrollen (32) als die zweite Tragrollengruppe (54-2) aufweist.

7. Schwenkschiebetür-Führungseinrichtung (20) nach Anspruch 5 oder Anspruch 6, **dadurch gekennzeichnet, dass** der Tragrollenabstand (58) zwischen einzelnen Tragrollen (32) der ersten Tragrollengruppe (54-1) kleiner als der Tragrollenabstand (58) der zweiten Tragrollengruppe (54-2) ist.

8. Schwenkschiebetür-Führungseinrichtung (20) nach einem der Ansprüche 4 bis 7, **dadurch gekennzeichnet, dass** die erste Tragrollengruppe (54-1) fünf Tragrollen (32) und die zweite Tragrollengruppe (54-2) zwei Tragrollen (32) aufweist.

9. Schwenkschiebetür-Führungseinrichtung (20) nach einem der Ansprüche 1 bis 8, **dadurch gekennzeichnet, dass** zumindest eine Tragrolle (32) derart in ihrer Höhe verstell- und fixierbar ausgeführt ist, dass die Tragrollen (32) in der Führungsbahn (26) gegeneinander verspannbar und im Betrieb spielfrei geführt sind.

10. Schwenkschiebetür-Führungseinrichtung (20) nach Anspruch 9, **dadurch gekennzeichnet, dass** benachbarte Tragrollen (32) im Wechsel das obere Lagerelement (34-1) und das untere Lagerelement (34-2) kontaktieren.

11. Schwenkschiebetür-Führungseinrichtung (20) nach Anspruch 9, **dadurch gekennzeichnet, dass** die beiden benachbarten Tragrollen (32) der beiden Tragrollengruppen (54), also die Tragrollen (32), die den Gruppenabstand (56) zwischen den beiden Tragrollengruppen (54) begrenzen, das gleiche Lagerelement (34) kontaktieren.

12. Schwenkschiebetür-Führungseinrichtung (20) nach einem der Ansprüche 1 bis 11, **dadurch gekennzeichnet, dass** alle Tragrollen (32) und die beiden konvexen Lagerelemente (42) jeweils die gleiche Geometrie aufweisen, so dass jede Tragrolle (32) je nach ihrer Positionierung auf beiden Lagerelementen (42) abrollen kann.

13. Schwenkschiebetür-Führungseinrichtung (20) nach einem der Ansprüche 1 bis 12, **dadurch gekennzeichnet, dass** die Lagerelemente (34) als Rundstäbe (42) ausgebildet sind.

14. Schwenkschiebetürsystem (10) aufweisend eine Schwenkschiebetür-Führungseinrichtung (20) nach einem der Ansprüche 1 bis 13.
